# EUROPÄISCHE PATENTSCHRIFT

(11) **EP 2 714 354 B1**
(45) Veröffentlichungstag und Bekanntmachung des Hinweises auf die Patenterteilung: **17.04.2019**
(21) Anmeldenummer: 12725420.9
(22) Anmeldetag: 01.06.2012
(51) Int. Cl.: B28B 7/46, B28B 1/00, B22F 3/00, B29C 67/00

(54) **VERFAHREN ZUM HERSTELLEN EINES FORMKÖRPERS SOWIE VORRICHTUNG**
METHOD FOR PRODUCING A MOULDED BODY AND DEVICE
PROCÉDÉ POUR PRODUIRE UN CORPS MOULÉ ET DISPOSITIF CORRESPONDANT

(30) Priorität: 01.06.2011 DE 102011050816
(43) Veröffentlichungstag der Anmeldung: 09.04.2014
(73) Patentinhaber: BAM Bundesanstalt für Materialforschung und -prüfung, 12207 Berlin (DE)
(72) Erfinder: GÜNSTER, Jens, 14169 Berlin (DE); GOMES, Cynthia Morais, 12163 Berlin (DE); BERGER, Georg, 16341 Panketal (DE)
(74) Vertreter: Helbig, Christian
(86) Internationale Anmeldenummer: PCT/EP2012/060420
(87) Internationale Veröffentlichungsnummer: WO 2012/164078

(56) Entgegenhaltungen:
- EP-A2- 0 431 924
- US-A1- 2003 065 400
- US-A1- 2010 323 301
- US-B1- 6 596 224

## Beschreibung

Die Erfindung betrifft Technologien zum Herstellen eines metallischen oder keramischen Formkörpers. Sie liegt auf dem Gebiet generativer Fertigungsverfahren, insbesondere auf dem Gebiet des Rapid Prototyping und betrifft den schichtweisen Aufbau eines kompakten Festkörpers.

### Hintergrund der Erfindung

In den letzten Jahren haben sich die Anforderungen an die Fertigungsindustrie, insbesondere im Bereich der Entwicklung und der Prototypenherstellung, stark gewandelt. Die zunehmende Anzahl an Produktvarianten, bei einer größeren Komplexität, lässt den Bedarf an Prototypen ständig steigen. Unter dem Leitbegriff "Rapid Prototyping" oder "Rapid Manufacturing" sind eine Vielzahl neuartiger Technologien entstanden, mit deren Hilfe sich der Anspruch an flexiblere Fertigung realisieren lässt.

Wesentliches Merkmal dieser Verfahren ist die Erstellung von Prozesssteuerdaten aus CAD-Geometriedaten mit anschließender Steuerung von Bearbeitungseinrichtungen. Allen diesen Verfahren sind folgende Merkmale gemein. Die Formgebung geschieht nicht durch Materialabtrag, sondern durch Zugabe von Material, oder durch den Phasenübergang eines Materials von flüssig nach fest bzw. es findet eine Kompaktierung eines pulverförmigen Ausgangsmaterials statt. Weiterhin bauen alle Verfahren auf Teilgeometrien aus Schichten endlicher Dicke, die durch einen Slice-Prozess realisiert werden, direkt aus CAD-Daten auf.

Die heute zur Verfügung stehenden Verfahren unterscheiden sich im Ausgangszustand der Materialien, also fest, flüssig oder gasförmig, bei der Schichtenaddition bzw. dem Bauprozess. Nachfolgend werden verschiedene Verfahren diskutiert.

Das Selective Laser Sintering (SLS) wurde ursprünglich für Pulver aus Nylon, Polycarbonat und Wachsen entwickelt und später auf Metallpulver übertragen. In einem Reaktor werden auf einen Grünkörper Pulverschichten aufgesintert, wobei die Schmelztemperatur durch Einsatz von CO₂ -Lasern erreicht wird.

Bei der Multiphase Jet Solidification (MJS) werden Metallpulver-Bindergemische ähnlich dem Spritzgussverfahren durch computerkontrollierte verfahrbare Düsen zu Schichten verarbeitet, die dann wiederum das Bauteil aufbauen.

Die Stereolithographie verwendet flüssige UV-sensitive Polymere als Ausgangsmaterialien, die schichtweise durch Lasereinstrahlung aushärten und auf dem Substrat abgeschieden weden. Das Werkstück wird sukzessive auf einer Plattform aufgebaut, die nach Aushärten der jeweiligen Schicht im Harzbad um die entsprechende Schichthöhe abgesenkt wird.

Ebenfalls flüssige Polymere als Ausgangsmaterial werden beim Solid Ground Curing (SGC) verwendet. Dünne Polymerschichten härten nach Belichten durch UV-Strahlung an den gewünschten Stellen aus und bauen so ein Bauteil schichtweise auf.

Simultaneous shot peening (SSP) wird ein Verfahren genannt, bei dem die Oberfläche einer geeigneten Form durch Besprühen mit flüssigem Metall abgebildet wird. Diese Abbildung kann beispielsweise als Teil eines Spritzgusswerkzeuges oder einer Pressform dienen.

Dem MJS-Prozess sehr ähnlich ist das Fused Deposition Modelling (FDM). Auch hier wird eine Düse NC-gesteuert über das höhenverstellbare aufzubauende Werkstück gefahren. Durch schichtenweises Abschneiden von geschmolzenem Material und entsprechendes Absenken der Plattform wird das Bauteil aufgebaut.

Laminated Object Manufacturing (LOM) wurde ursprünglich für die Herstellung von Komponenten aus Papier oder Kunststoff entwickelt. Ein Laser schneidet aus einzelnen Lagen die entsprechenden Bauteilschichten, die unter Verwendung von Klebern zum Werkstück zusammenlaminiert werden.

Im Dokument EP 1 266 878 A1 sind ein sogenanntes LSD-Verfahren sowie eine Vorrichtung zur Ausführung des Verfahrens beschrieben, bei denen keramische Grünschichten mittels eines an das Foliengießen angelehntes Verfahren aufgebracht werden. Weiterhin wird dann vergleichbar dem selektiven Lasersintern (Selective Laser Sintering) ein Laser zur lokalen Verfestigung / Versinterung der keramischen Grünschichten genutzt. Mittels Sintern von ausgewählten Stellen des keramischen Materials mit dem Laserstrahl wird der Formkörper schichtweise aufgebaut. Bei dem bekannten Verfahren werden wiederholt Schichten einer flüssigen Suspension oder einer plastischen Masse aufgetragen und anschließend getrocknet. Hierauf erfolgt dann das Sintern der jeweils getrockneten Schicht mit dem Laserstrahl an ausgewählten Stellen zur Bildung des Formkörpers. Bei dem bekannten Verfahren wird der Laser eingesetzt, um die Schichtinformation in die getrocknete Grünschicht über einen Sinterprozess zu schreiben. Die Laserbestrahlung führt zwar zu einer lokalen Versinterung der Grünschicht, so dass sich bestrahlte Bereiche aus dem Grünkörper später beim Entformen mittels Wasser als Lösungsmittel herauslösen lassen, jedoch weisen die laserbestrahlten Bereiche Eigenschaften verschieden von konventionell gesinterten Keramiken auf. Auch ein anschließendes konventionelles Sintern kann die Eigenschaften des so aufgebauten Bauteils nicht derart beeinflussen, dass ein Bauteil mit Eigenschaften vergleichbar einem konventionell gesinterten Bauteil entsteht.

Weiterhin sind 3D-Binderdruckverfahren bekannt, zum Beispiel aus dem Dokument WO 98/09798. Hierbei erfolgt im Rahmen des schichtweisen Verbindens von Materialschichten das Ausbringen eines Bindemittels nach dem Auftragen einer Pulver- oder Granulatschicht. Das Bindemittel dient zum Verkleben der schrittweise aufgetragenen Schichten. Hierfür geeignete Materialien sind zum Beispiel im Dokument DE 10 2006 029 298 A1 beschrieben.

Das Dokument EP 0 431 924 A2 offenbart ein Verfahren und eine Vorrichtung zum Herstellen eines Formkörpers gemäß dem Oberbegriff des Anspruchs 1 und 15 bzw. Das Dokument US 2010 323301 A1 offenbart ein Verfahren zum Herstellen eines Formkörpers gemäß dem Oberbegriff des Anspruchs 4.

### Zusammenfassung der Erfindung

Aufgabe der Erfindung ist es, verbesserte Technologien zum Herstellen eines metallischen oder keramischen Formkörpers anzugeben, mit denen Formkörper mit einer gewünschten Materialdichte zuverlässig und die Produktionsanlage schonend herstellbar sind.

Diese Aufgabe wird erfindungsgemäß durch ein Verfahren nach Ansprüche 1 und 4 gelöst. Weiterhin ist eine Vorrichtung zum Herstellen eines metallischen oder keramischen Formkörpers nach dem unabhängigen Anspruch 15 geschaffen. Vorteilhafte Ausgestaltungen der Erfindung sind Gegenstand von abhängigen Unteransprüchen.

Die Erfindung umfasst den Gedanken eines Verfahrens zum Herstellen eines metallischen oder keramischen Formkörpers, wobei das Verfahren die folgenden Schritte aufweist:
- Ausbilden eines Formkörpers aus einem metallischen oder keramischen Material, indem wiederholt die folgenden Schritte ausgeführt werden:
- Auftragen einer Schicht einer Suspension aus metallischen oder keramischen Partikeln, die in einer Suspensionsflüssigkeit dispergiert sind, in einem Arbeitsvolumen,
- Entfeuchten der aufgetragenen Schicht im Arbeitsvolumen und
- lokales Aufbringen auf die getrocknete Schicht und Aushärten eines Bindemittels einem Schichtmodell des herzustellenden Formkörpers entsprechend, derart, dass Partikel in der getrockneten Schicht untereinander und wahlweise zusätzlich mit Partikeln mindestens einer unter der getrockneten Schicht liegenden Schicht lokal haftend verbunden werden, und
- Entformen des Formkörpers, indem bindemittelfreies Restmaterial von den mit Hilfe des Bindemittels untereinander verbundenen Partikeln gelöst wird.

Gemäß einem weiteren Aspekt der Erfindung umfasst das Erzeugen des Formkörpers das lokal begrenzte Aufbringen eines die Löslichkeit des Partikelmaterialhaufwerks ändernden flüssigen Bindemittels. Dabei wird unter dem Partikelmaterialhaufwerk die aufgebrachte Schicht der Partikel bzw. das Partikelmaterial verstanden. Dieses - gemäß dem Schichtmodell des herzustellenden Formkörpers - lokal begrenzte Aufbringen des die Löslichkeit des Partikelmaterials ändernden flüssigen Bindemittels bewirkt, dass sich die Löslichkeit des Partikelmaterials der Schicht gegenüber der Löslichkeit der nicht mit dem Bindemittel versehenen Partikel ändert, bzw. sich die Löslichkeit betreffender Anteile der Schicht ändert. Damit wird die Löslichkeit der für den Aufbau des Formkörpers selbst bestimmten Abschnitte der Partikelschicht geändert. Beim Entformen umgebenden Partikelmaterials bildet sich somit der Formkörper heraus.Nach einem weiteren Aspekt der Erfindung ist eine Vorrichtung zum Herstellen eines metallischen oder keramischen Formkörpers mit den folgenden Merkmalen geschaffen:
- einem Vorratsvolumen, welches konfiguriert ist, eine Suspension aus metallischen oder keramischen Partikeln aufzunehmen, die in einer Suspensionsflüssigkeit dispergiert sind,
- eine Schicht bildende Auftragseinrichtung, welche konfiguriert ist, wiederholt eine Suspensionsmenge aus dem Vorratsvolumen zu entnehmen und in ein Arbeitsvolumen zu übertragen und dort als Schicht aufzutragen,
- eine Entfeuchtungseinrichtung, welche konfiguriert ist, die aufgetragene Schicht im Arbeitsvolumen zu entfeuchten,
- eine Bindemittel-Austrageinrichtung, welche konfiguriert ist, ein Bindemittel einem Schichtmodell des herzustellenden Formkörpers entsprechend auf die entfeuchtete Schicht lokal aufzutragen, derart, dass Partikel in der entfeuchteten Schicht untereinander und wahlweise zusätzlich mit Partikeln mindestens einer unter der entfeuchteten Schicht liegenden Schicht lokal haftend verbunden werden, und
- eine Entformungseinrichtung, welche konfiguriert ist, den Formkörper zu entformen, indem bindemittelfreies Restmaterial von den mit Hilfe des Bindemittels untereinander verbundenen Partikeln gelöst wird.

Bei dem vorgeschlagenen Verfahren wird der metallische oder keramische Formkörper in einem hinsichtlich der äußeren Gestaltung des herzustellenden Formkörpers formfreien Arbeitsvolumen erzeugt, indem nacheinander mehrere Schichten einer Suspension aus metallischen oder keramischen Pulverpartikeln, die in einer Suspensionsflüssigkeit dispergiert sind, aufgetragen werden. Nach dem Auftragen erfolgt jeweils eine Trocknung der aufgetragenen Schicht, worauf dann ein Bindemittel lokal aufgebracht wird, um die Partikel in der getrockneten Schicht untereinander dem Schichtmodell des herzustellenden Formkörpers entsprechend zu verbinden. Wahlweise erfolgt der Auftrag des Bindemittels derart, dass das Bindemittel sich nicht nur in den vorgesehenen Bereichen der getrockneten Schicht ausbreitet, sondern auch in eine oder mehrere darunterliegende Schichten, sodass die aktuell aufgetragene Schicht an die darunterliegenden Schichten angebunden wird. Die Verteilung des Bindemittels kann beispielsweise mittels des Druckes eingestellt werden, mit dem das Bindemittel auf die getrocknete Schicht aufgetragen wird. Das lokale Auftragen des Bindemittels wird einem elektronischen Datensatz für das Schichtmodell des herzustellenden Formkörpers entsprechend gesteuert. In dem Schichtmodell ist der herzustellende Formkörper vorher in Schichten zerlegt, woraus ein für den Herstellungsprozess angepasster Datensatz zur Steuerung des Verfahrens abgeleitet ist. Die Bereitstellung des Schichtmodells ist als solche bekannt und wird hier deshalb nicht weiter erläutert.

Die Dicke der nacheinander aufgetragenen Suspensionsschichten beträgt vorzugsweise zwischen etwa 1 µm und etwa 200 µm.

Das vorgeschlagene Verfahren ist ein Rapid-Prototyping-Verfahren. Manchmal wird auch die Bezeichnung Rapid-Manufacturing-Verfahren genutzt.

Nachdem das wiederholte Auftragen der Suspensionsschichten und deren Bearbeitung abgeschlossen sind, wird der Formkörper entformt. Dieses bedeutet, dass die mit dem Bindemittel untereinander verbundenen Partikel, welche den Formkörper bilden, vom bindemittelfreien Restmaterial in dem Arbeitsvolumen getrennt werden. Das Arbeitsvolumen selbst ist für den hergestellten Formkörper selbst nicht formgebend. Vielmehr wird die äußere Gestaltung des Formkörpers mit Hilfe des lokalen Auftragens des Bindemittels bewirkt, welches nach dem Aushärten für den Zusammenhalt der Partikel sorgt.

Eine bevorzugte Weiterbildung der Erfindung sieht vor, dass das Bindemittel mit Hilfe einer Druckvorrichtung lokal aufgebracht wird. Das Aufbringen des Bindemittels erfolgt bei der Druckvorrichtung zweckmäßigerweise mit Hilfe eines geeigneten Druckkopfes. Mit der Druckvorrichtung wird ein dreidimensionales Drucken zur Herstellung des Formkörpers realisiert.

Bei einer zweckmäßigen Ausgestaltung der Erfindung kann vorgesehen sein, dass die aufgetragene Schicht beim Entfeuchten erhitzt wird.

Eine vorteilhafte Ausführungsform der Erfindung sieht vor, dass der Formkörper als ein poröser Formkörper hergestellt wird.

Bevorzugt sieht eine Fortbildung der Erfindung vor, dass beim Aushärten des Bindemittels ein oder mehrere Schritte aus der folgenden Gruppe von Schritten ausgeführt werden: Lufttrocknen, Wärmezuführen und UV-Lichtbestrahlen. Das Aushärten des Bindemittels kann allein durch Lufttrocknung erfolgen. Ergänzend oder alternativ können eine Wärmezufuhr und / oder eine UV-Lichtbestrahlung eingesetzt werden, um das Bindemittel nach dem Auftragen auszuhärten.

Eine Weiterbildung der Erfindung kann vorsehen, dass das Entformen zumindest teilweise in einem Flüssigkeitsbad ausgeführt wird. Bei dem Flüssigkeitsbad kann es beispielsweise um ein Wasserbad handeln. Mit Hilfe des Flüssigkeitsbades werden die nicht mit Bindemittel gebundenen Partikel vom Formkörper gelöst.

Eine bevorzugte Weiterbildung der Erfindung sieht vor, dass der Formkörper mit einer Dichte von wenigstens 60Vol.-%, bevorzugt von wenigstens 65Vol.-% und weiter bevorzugt von wenigstens 70Vol.-% hergestellt wird.

Gemäß einer typischen Ausführungsform wird ein Verfahren zum Herstellen bzw. Erzeugen eines Formkörpers bzw. eines Grünkörpers vorgeschlagen, wobei eine Dichte des Grünkörpers mindestens 60% der mittleren Materialdichte einer keramischen Komponente einer Suspension beträgt, wenn die Dichte des Grünkörpers als Quotient aus einer Masse des Grünkörpers und einem Volumen, das an Hand von äußeren Konturen des Grünkörpers berechnet wird, definiert ist. Im Falle von Aluminiumoxid (Al₂O₃) mit einer theoretischen Dichte von 3,94 g·cm⁻³ bedeutet dies, dass mittels Schlickerdeposition schichtweise aufgebaute Al₂O₃-Grünkörper eine Dichte größer als 2,36 g·cm⁻³ aufweisen.

Erfindungsgemäß wird ein Verfahren zum Herstellen bzw. Erzeugen eines Formkörpers bzw. eines Grünkörpers vorgeschlagen, wobei das Erzeugen der Schicht unter Verwendung einer hohlen Rakel erfolgt. Dabei wird die Suspension für den Schichtaufbau durch den hohlen Rakel gefördert. Vorteile ergeben sich daraus, dass ein gleichmäßiger und gleichförmiger Austritt des der hohlen Rakel zugeführten Schlickers aus der schlitzförmigen Austrittsöffnung der Hohlrakel das Streichen einer Schicht definierter Dicke ermöglicht.

Bei einer zweckmäßigen Ausgestaltung der Erfindung kann vorgesehen sein, dass beim Auftragen der Schicht eine Grünschicht gebildet wird, indem eine Suspension aus keramischen Partikeln aufgetragen wird. Die Suspension aus keramischen Partikeln wird auch Schlicker bezeichnet. Ein auf diese Weise hergestellter keramischer Formkörper wird Grünkörper genannt.

Eine vorteilhafte Ausführungsform der Erfindung sieht vor, dass ein organisches Bindemittel verwendet wird, welches nach dem Aushärten nicht wasserlöslich und / oder nicht löslich in organischen Lösungsmitteln ist. Auf diese Weise wird verhindert, dass beim anschließenden Entformen unbeabsichtigt Partikel von den gebundenen Schichten gelöst werden.

Bevorzugt sieht eine Fortbildung der Erfindung vor, dass ein anorganisches Bindemittel verwendet wird. Als organisches Bindemittel kann beispielsweise ein SiO₂ -solbasiertes Bindemittel zum Einsatz kommen.

Bei einer vorteilhaften Ausgestaltung der Erfindung kann vorgesehen sein, dass der entformte Formkörper gesintert wird. In einer Ausgestaltung wird das organische Bindemittel beim Sintern des Formkörpers pyrolysiert. In dieser oder anderen Ausgestaltungen kann vorgesehen sein, dass der Formkörper durch das Sintern zusätzlich verdichtet wird, sodass der Formkörper mit einer Materialdichte hergestellt wird, die größer als die Materialdichte des Formkörpers nach dem Entformen ist.

Im Zusammenhang mit der Vorrichtung zum Herstellen des metallischen oder keramischen Formkörpers kann vorgesehen sein, dass die Bindemittel-Austrageinrichtung eine Druckereinrichtung ist, mit der, vergleichbar der Technologie des Tintenstrahldruckens, das Bindemittel auf die zuvor getrocknete Schicht lokal aufgetragen wird.

Teil der Entformungseinrichtung zum Entformen des Formkörpers kann ein Flüssigkeitsbad sein, in welchem die bindemittelfreien Restpartikel von den mit Hilfe des Bindemittels untereinander verbundenen Partikeln gelöst werden.

Die schichtbildende Auftragseinrichtung kann eine Fördereinrichtung umfassen, um die zur Schichtbildung notwendige Suspensionsmenge aus dem Vorratsvolumen in das Arbeitsvolumen zu fördern. Eine Rakeleinrichtung kann vorgesehen sein, um die Schichtausbildung zu unterstützen.

Die Rakeleinrichtung umfasst eine hohle Rakel, wobei die hohle Rakel ein Volumen umfasst, das zwei Öffnungen besitzt: einen Schlauchanschluss für die Schlickerzuführung und einer schlitzförmigen Austrittsöffnung für den Schlickeraustritt. Das Volumen ist derart gestaltet, dass es einen gleichmäßigen und gleichförmigen Austritt des durch den Schlauchanschluss zugeführten Schlicker aus der schlitzförmigen Austrittsöffnung ermöglicht. Die schlitzförmige Austrittsöffnung erstreckt sich wesentlich über die Breite der Rakel. Der aus dem Schlitz austretende Schlicker wird mittels der Rakel zu einer Schicht definierter Dicke gestrichen.

Gemäß bevorzugter Ausführungsformen des vorgeschlagenen Verfahrens weist die so erhaltene Schicht definierter Dicke eine konstante Dicke auf. Ein wesentliches Merkmal einer so erhaltenen Schicht definierter Dicke besteht darin, dass die jeweils aufgebrachte Schicht eine über ihre gesamte Ausdehnung konstante Höhe aufweist und sich somit insbesondere durch eine ebene, nicht gewellte und damit planare Oberfläche auszeichnet. Jede mit der Hohlrakel gemäß des vorgeschlagenen Verfahrens erhaltene Schicht ist somit dadurch gekennzeichnet, dass sie vorteilhafterweise eine ebene, nicht gewellte Oberfläche aufweist.

Damit besteht der verfahrensgemäß erhaltene Formkörper durchgängig aus in sich planaren Schichten und ist frei von Wellungen, da jede Schlickerschicht stets auf eine planare Oberfläche aufgetragen wird. Das bietet besondere Vorteile für ein gleichmäßiges Trocknen und die damit erreichbare gleichmäßige Haftung nachfolgend übereinander angeordneter Schichten, die ja den schichtweise aufgebauten Formkörper kennzeichnen.

Ein beispielhaftes Ausführungsbeispiel der Rakel besteht aus zwei in definiertem Abstand zueinander parallel angeordneten rechteckigen Platten. An drei Seiten sind die rechteckigen Platten gegeneinander abgedichtet, so dass ein an einer Seite offener Hohlraum entsteht. Die offene Seite bzw. die einseitige Öffnung der Hohlrakel dient als schlitzförmige Austrittsöffnung für den Schlicker, wobei der Schlicker über einen Schlauchanschluss an einer der Platten zugeführt werden kann.

Dabei kann der Schlauchanschluss beispielsweise so ausgeführt sein, dass eine der Platten eine zum offenen Hohlraum gerichtete durchgehende Öffnung hat, die auf der Außenseite der Platte in eine Schlauch-Olive oder einen andersartigen Anschluß für einen den Schlicker zuführenden Schlauch übergeht.

In einer Ausführungsform ist die Entfeuchtungseinrichtung mit einer Heizeinrichtung gebildet, die konfiguriert ist, der aufgetragenen Suspensionsschicht Wärme zuzuführen, sodass diese getrocknet wird.

### Beschreibung bevorzugter Ausführungsbeispiele der Erfindung

Die Erfindung wird im Folgenden anhand von bevorzugten Ausführungsbeispielen näher erläutert. Es werden Ausgestaltungsformen eines Verfahrens zum Herstellen eines metallischen oder keramischen Formkörpers beschrieben, die wenigstens zum Teil dem Rapid Prototyping oder dem Rapid Manufacturing zuzuordnen sind.

Bei dem Verfahren wird zunächst in üblicher Weise mit einem Rechnerprogramm das herzustellende Bauteil entworfen, geeignet in Schichten geschnitten und als Datensatz exportiert. Mit dem Zerlegen in Schichten entsteht ein Schichtmodell des herzustellenden Formkörpers. Der Datensatz enthält Schichtinformationen für den herzustellenden Formkörper.

Die Schichtdaten werden von einem Rechner der Herstellungsvorrichtung interpretiert, um hieraus Steuerungsdaten abzuleiten, mit denen die Herstellungsvorrichtung gesteuert wird, insbesondere zunächst zum Ausbilden der dünnen Suspensionsschichten, die im Fall eines keramischen Materials auch als Grünschichten bezeichnet werden. Zu den nutzbaren keramischen Pulvermaterialien gehören zum Beispiel Porzellan, Al₂O₃, AlN, SiO₂, Si₃N₄ .

Das Ergebnis des Herstellungsprozesses ist ein Prototyp, der formfrei hergestellt wurde, beispielsweise ein Halbzeug.

Zur Herstellung der Suspensionsschichten wird eine speziell eingestellte Suspension eingesetzt, die im Fall einer Suspension eines keramischen Materials auch als Schlicker bezeichnet wird. Im Vergleich zu konventionellem Gießschlicker muss die Suspension hier in der Regel eine höhere Viskosität bei niedrigerem Wassergehalt aufweisen. In einer möglichen Ausgestaltung des Verfahrens bildet ein Schlicker für die Serienfertigung die Grundlage, der einzig über die Erhöhung des Feststoffanteils eingedickt werden muss, oder direkt verwendet werden kann. Damit ist der Herstellungsprozess für den Schlicker in diesem Fall sehr kostengünstig.

Der Vorteil des Einsatzes von flüssiger Suspension gegenüber der im Stand der Technik vorgesehenen Nutzung von Pulver liegt in der Steigerung der Materialdichte, die im Fall eines keramischen Materials auch als Gründichte bezeichnet wird. Im pulverförmigen Zustand laden sich die Pulverpartikel elektrostatisch auf und stoßen sich gegenseitig ab, was zum einen zu einer geringen Schüttdichte, zum anderen zu relativ dicken Schichten führt. Beide Effekte resultieren in einer unbefriedigenden Abbildungsgenauigkeit.

Bei dem vorgeschlagenen Verfahren wird die zur Herstellung des Formkörpers bereitgestellte Suspension mittels einer Fördereinrichtung aus einem Speicher- oder Vorratsgefäß mit Hilfe eines hohlen Rakels mit einer Spaltweite von zum Beispiel 500 µm gepresst. Ein Manipulator bewegt den Rakel im vertikalen Abstand von etwa 1 bis etwa 100 µm über eine beheizte keramische Platte, wodurch die Suspension in einem Arbeitsvolumen in einer dünnen Schicht definierter Dicke aufgetragen wird. Die Platte hat anfänglich eine Temperatur von unter 100°C an ihrer Oberfläche, um ein Aufkochen des Wasseranteils in der Suspension bei Verwendung wasserbasierter Schlicker während des Auftragens der ersten Schichten zu verhindern. Mit steigender Schichtanzahl kann die Temperatur deutlich gesteigert werden, da die bereits aufgebrachten Lagen sehr saugfähig sind und die Feuchtigkeit der neuen Schicht innerhalb von Sekundenbruchteilen zunächst aufnehmen. Die neue Schicht wird dadurch stabilisiert, und die Feuchtigkeit wird innerhalb von weniger als 30 Sekunden verdampft.

Neben der Trocknung von unten über die beheizte Platte kann alternativ oder ergänzend eine Strahlungsheizung in Kombination mit einem Lüfter eingesetzt werden. Eine zusätzliche Trocknung von oben ist unter Umständen nötig, wenn entstandene Scherben isolierend wirken und damit die Temperatur der obersten Schichten zu niedrig für eine ausreichend schnelle Trocknung bei steigender Dicke des Schichtaufbaus werden kann. Die mit diesem Verfahren herstellbaren Schichten weisen eine Dichte vergleichbar zu konventionell hergestellten Grünkörpern von etwa 65Vol.-% auf.

Mittels eines Druckkopfes einer Druckereinrichtung wird, ähnlich einem dreidimensionalen Drucken, ein Bindemittel die getrocknete Schicht lokal aufgespritzt. Der Binder benetzt die keramischen oder metallischen Partikel und durchringt so die Schicht. Diese Durchdringung der Schicht ist notwendig, um die gewünschten Partikel im Schichtquerschnitt zu verbinden und die obere Schicht an tiefer liegende Schichten lokal zu binden. Die Menge des aufgespritzten Binders ist derart bemessen, dass der Binder bis zu einer gewünschten Tiefe in den Körper, aufgebaut aus Schichten, eindringen kann. Diese Eindringtiefe des Binders richtet sich nach der Schichtdicke einer einzelnen aufgetragenen Schicht und dem gewünschten Durchdringungsgrad des Bindemittels tiefer liegender Schichten. Der Binder hat die Eigenschaften, dass er nach dem Aufspritzen aushärtet, zum Beispiel durch Luftkontakt, thermisch, UV-Licht, 2-Phasenaufspritzen und / oder dergleichen, und anschließend nicht oder nur im geringen Maße durch andere den aufgebauten Formkörper ohne Binder auflösende Medien löslich ist.

Nach Abschluss des Druckvorgangs wird eine neue Schicht mit einer Dicke von etwa 1 µm bis etwa 100 µm aufgebracht und getrocknet, und der Druckprozess beginnt von neuem. Sukzessive wird derart der Formkörper dem Schichtmodell entsprechend Schicht für Schicht aufgebaut. Nach Abschluss der Aufbauphase wird der nun aus einer Vielzahl von Schichten bestehende Formkörper in ein Wasserbad oder andere den aufgebauten Formkörper ohne Binder auflösende Medien gelegt, und die binderfreien Bereiche lösen sich auf. Auf diese Weise gibt der Formkörper ein Bauteil frei.

Nach Abschluss des thermischen Aushärtens/Vernetzens mittels Laserstrahlung wird eine neue Schicht einer Dicke von 1-500 µm, bevorzugt von 5 bis 300, insbesondere von 25 bis 150 µm aufgebracht und getrocknet, danach wird erneut Binder aufgetragen und ausgehärtet/vernetzt. Sukzessive wird derart ein Bauteil Schicht für Schicht aufgebaut. Nach Abschluss der Aufbauphase wird der nun aus einer Vielzahl von Schichten bestehende Grünkörper in ein Wasserbad oder in ein anderes Medium gelegt, das den Teil des Grünkörpers auflöst und/oder auswäscht, der nicht vom Binder ausgehärtet/vernetzt ist. Die binderfreien Bereiche des Grünkörpers lösen sich vollständig auf und der Grünkörper gibt das Bauteil frei.

Das so generierte Bauteil entspricht in seinen Eigenschaften einem konventionellen Grünkörper, dessen Porenvolumen teilweise mit einem Binder aufgefüllt ist. Bei Verwendung eines organischen Binders wird der Binder beim Sintern des Körpers leicht ausgetrieben. Im Falle eines anorganischen Binders, z.B. bei einem SiO₂-Sol basierten System, kann die Dichte des erhaltenen Grünkörpers sogar noch höher liegen, als bei einem konventionell hergestellten keramischen, polymeren bzw. metallischen Grünkörper.

So hergestellte Formkörper entsprechen im Fall der Nutzung eines keramischen Partikelmaterials in ihren Eigenschaften denen eines konventionellen Grünscherbens, dessen Porosität mit einem Binder teilweise aufgefüllt ist. Die Dichte des ungesinterten keramischen Grünkörpers ist höher als bei allen bekannten generativen Verfahren.

Im Falle eines organischen Binders wird der Binder leicht beim Sintern ausgetrieben. Im Falle eines anorganischen Binders, zum Beispiel SiO₂ -Sol basierte Systeme, kann die Dichte des Körpers sogar noch höher liegen als bei einem konventionell hergestellten keramischen Grünkörper.

Es können erstmals in einem generativen Herstellungsprozess, zum Beispiel Rapid Prototyping, keramische oder metallische Formkörper generiert werden, die insbesondere im Fall der Verwendung des keramischen Materials eine Dicht vergleichbar oder sogar höher als konventionell hergestellte Grünkörper haben.

Nach dem Stand der Technik werden zum Auftragen von Pulverschichten beim dreidimensionalen Drucken Suspensionen (für Keramik auch Schlicker genannt) eingesetzt, jedoch nicht mit definierter Schichtdicke aufgetragen. Bei der vorgeschlagenen Nutzung der Suspensionen entfällt die Problematik einer Verunreinigung des Druckkopfes durch umherfliegende Pulverpartikel. Beim Druckprozess auf Pulverschichten, wie dies im Stand der Technik vorgesehen ist, werden immer wieder lose Keramikpartikel an den Druckkopf geschleudert und verkleben dort die Druckdüsen.

Weiter entfällt beim vorgeschlagenen Verfahren die Problematik, dass sehr feine Partikel eine geringe Fließfähigkeit im trocknen Zustand besitzen und daher ab einer bestimmten minimalen Größe nicht mehr zum Schichtauftrag geeignet sind, oder ein erheblicher technologischer Aufwand betrieben werden muss, um homogene Schichten feinster Pulver zu generieren. Genau diese Probleme sind wegen des Auftragens einer Suspension vermieden. Feine Partikel sind von Vorteil bei zum Beispiel der Oberflächenqualität der Prototypen, deren Sinterfähigkeit oder bei der Einstellung bestimmter besonders feinkristalliner Gefüge in dem Keramikbauteil.

Neben einer höheren Gründichte stützt das bei dem hier vorgeschlagenen Verfahren entstehende Materialbett (Grünbett), im Gegensatz zum Pulverbett, den gesinterten Prototypen. Damit entfällt das vorherige, zeitaufwendige Modellieren und das nachträgliche Entfernen von Supportkonstruktionen.

Es werden mit dem vorgeschlagenen Verfahren erstmals Grünkörper mittels Rapid Prototyping generiert, die Eigenschaften bezüglich Dichte und Festigkeit vergleichbar einem konventionell hergestellten Grünkörper besitzen. Dies ermöglicht in einem anschließenden Sinterschritt die Darstellung von Keramiken mit Eigenschaften vergleichbar zu Keramiken hergestellt in einem konventionellen Prozess.

Durch die Möglichkeit, in einer Ausgestaltung konventionelle Schlicker zum Aufbau von Prototypen zu verwenden, ist das Verfahren besonders kostengünstig.

Die in der vorstehenden Beschreibung und den Ansprüchen offenbarten Merkmale der Erfindung können sowohl einzeln als auch in beliebiger Kombination für die Verwirklichung der Erfindung in ihren verschiedenen Ausführungen von Bedeutung sein.

Bekannte Verfahren des "Rapid Prototyping" oder "Rapid Manufacturing" basieren auf der Erstellung von Prozesssteuerdaten aus CAD-Geometriedaten mit anschließender Steuerung von Bearbeitungseinrichtungen. Beim "Selective Laser Sintering" (SLS) werden in einem Reaktor auf einen Grünkörper Pulverschichten aufgesintert, wobei ein CO₂-Laser das Pulver lokal bis auf die Schmelztemperatur erhitzt. Bei der "Multiphase Jet Solidification" (MJS) wird das Bauteil schichtweise aus Metallpulver-Bindergemischen mit computerkontrolliert verfahrbaren Düsen aufgebaut. Ähnlich dazu wird beim "Fused Deposition Modelling" (FDM) mit einer NC- gesteuerten Düse geschmolzenes Material schichtenweise abgeschieden und durch entsprechendes Absenken einer Plattform das Bauteil aufgebaut. Bei der Stereolithografie werden flüssige UV-sensitive Polymere auf einem schrittweise abgesenkten Substrat schichtweise durch Lasereinstrahlung ausgehärtet. Wird statt dessen UV-Flutlicht eingesetzt, spricht man vom "Solid Ground Curing" (SGC). Beim "Simultaneous Shot Peening" (SSP) wird die Oberfläche einer geeigneten Negativ-Form durch Besprühen mit flüssigem Metall abgebildet. Beim "Laminated Object Manufacturing" (LOM) werden Bauteilschichten aus Laser-geschnittenen Materiallagen aufgebaut und anschliessend unter Verwendung von Klebern zum Werkstück laminiert. Ebenso können gerakelte Al₂0₃ Folien geschnitten und laminiert werden. Gemäß der DE 101 28 664 werden keramische Formkörper durch Sintern mit einem Laserstrahl von ausgewählten Stellen eines keramischen Materials gebildet. Das Verfahren umfasst die Schritte: - Auftragen einer Schicht einer flüssigen Suspension oder plastischen Masse, - Trocknen der jeweils aufgetragenen Schicht, und - Sintern der jeweils getrockneten Schicht mit dem Laserstrahl an ausgewählten Stellen und wird verkürzt als Layer-wise Slurry Deposition (LSD) bezeichnet. Beim 3D Druck werden Schichten polymerer, metallischer oder keramischer Pulver aufgetragen und ortsselektiv mittels lokalem Einspritzen eines Binders über eine dem Tintenstrahldruck vergleichbare Technologie verfestigt. US 6,596,224 beschreibt ein dazu vergleichbares Verfahren, nur dass das die jeweiligen Pulverschichten nicht als lose Pulverschüttungen erzeugt, sondern mittels Schlickerguss als kompakte Pulverschichten generiert werden, jedoch nicht mit definierter Dicke, sondern wellig und damit nicht planar.

Es wird ein Verfahren zum Herstellen eines Formkörpers - der ein Grünkörpers ist - vorgeschlagen, wobei das Verfahren umfasst: (a) Erzeugen einer Schicht aus einer einen laseraushärtbaren und/oder laservernetzbaren Binder enthaltenden Suspension; (b) Aushärten und/oder Vernetzen des Binders durch lokale Laserexposition; optionales Wiederholen der Schritte (a) und (b), wobei eine zusätzliche Schicht auf einer ausgehärteten und/oder vernetzten Schicht aufgetragen wird; (c) Auswaschen und/oder Lösen nicht ausgehärteter und/oder nicht vernetzter Anteile in einem flüssigen Medium, um den Grünkörper zu erhalten.

Vorteile bestehen darin, dass das vorgeschlagene Verfahren geeignet ist für das Rapid-Prototyping durch lokales thermisches oder photonisches Aushärten und/oder Vernetzen von mit Binder besprühten hochkompakten Pulverschichten aus unterschiedlichen Feststoffen. Das Verfahren erfordert vorteilhafterweise keinerlei Druckertechnologie und ist daher nicht auf die Verwendung von Druckerdüsen angewiesen. Ein besonderer Vorteil besteht darin, dass die Dichte und die Festigkeit der erhaltenen Grünkörper jener von konventionell aus Suspensionen gleicher Zusammensetzung hergestellten Grünkörpern entspricht oder höher als diese ist.

Gemäß einer weiteren Ausführungsform wird ein Verfahren zum Herstellen eines Formkörpers bzw. eines Grünkörpers vorgeschlagen, wobei das Erzeugen der Schicht mit einer Suspension erfolgt, in der der Binder enthalten ist. Der Anteil des Binders liegt unter Volumen-10 %.

Gemäß einer weiteren Ausführungsform wird ein Verfahren zum Herstellen bzw. Erzeugen eines Formkörpers bzw. eines Grünkörpers vorgeschlagen, wobei das Erzeugen der Schicht ein zumindest teilweises Eindringen eines Binders in eine getrocknete Schicht einer Suspension umfasst, die keinen Binder enthält. Das bietet Vorteile geringerer Einschränkungen in Hinsicht auf die Zusammensetzung der Suspension, da der Binder keinen Einfluss auf die Dispersionsstabilität der Suspension hat. Andererseits kann eine getrocknete Schicht mit einer höheren Dichte erzielt werden. Entmischungen während des Setzens der Suspension sind vollständig ausschließbar.

Gemäß einer weiteren Ausführungsform wird ein Verfahren zum Herstellen bzw. Erzeugen eines Formkörpers bzw. eines Grünkörpers vorgeschlagen, wobei das Eindringen des Binders durch Besprühen der getrockneten Schicht mit dem Binder und/oder durch Tauchen der getrockneten Schicht in den Binder oder in eine den Binder enthaltende Flüssigkeit bewirkt wird. Vorteile dieser Ausführungsform ergeben sich aus einer größeren Palette der einsetzbaren Binder und der Möglichkeit, den Durchdringungsgrad der getrockneten Schicht mit dem Binder über die Konzentration des Binders in seiner Lösung einstellen und steuern zu können.

Gemäß einer weiteren Ausführungsform wird ein Verfahren zum Herstellen bzw. Erzeugen eines Formkörpers bzw. eines Grünkörpers vorgeschlagen, wobei der ausgehärtete und/oder vernetzte Binder im flüssigen Medium nicht löslich ist. Auf diese Art und Weise werden selektiv diejenigen Anteile ausgewaschen, die nicht vom Binder verfestigt wurden.

Gemäß einer weiteren Ausführungsform wird ein Verfahren zum Herstellen bzw. Erzeugen eines Formkörpers bzw. eines Grünkörpers vorgeschlagen, wobei das Medium Wasser und/oder ein organisches Lösungsmittel umfasst, und wobei das organische Lösungsmittel ausgewählt ist unter: Aceton, Cycloheyan, Dioxan, n-Hexan, n-Oktan, Toluol, Trichlorethanol, Dimethylethylketon, iso-Propanol, Ethylalkohol, Methyl-ethyl-keton, oder daraus erhältlichen Mischungen.

Gemäß einer weiteren Ausführungsform wird ein Verfahren zum Herstellen bzw. Erzeugen eines Formkörpers bzw. eines Grünkörpers vorgeschlagen, wobei eine Dichte des Grünkörpers mindestens 60% der mittleren Materialdichte einer keramischen Komponente einer Suspension beträgt, wenn die Dichte des Grünkörpers als Quotient aus einer Masse des Grünkörpers und einem Volumen, das an Hand von äußeren Konturen des Grünkörpers berechnet wird, definiert ist. Im Falle von Aluminiumoxid (Al₂O₃) mit einer theoretischen Dichte von 3,94 g·cm⁻³ bedeutet dies, dass mittels Schlickerdeposition schichtweise aufgebaute Al₂O₃-Grünkörper eine Dichte größer als 2,36 g·cm-³ aufweisen.

Gemäß einer weiteren Ausführungsform wird ein Verfahren zum Herstellen bzw. Erzeugen eines Formkörpers bzw. eines Grünkörpers vorgeschlagen, wobei das Erzeugen der Schicht unter Verwendung einer hohlen Rakel erfolgt. Dabei wird die Suspension für den Schichtaufbau durch den hohlen Rakel gefördert. Vorteile ergeben sich daraus, dass ein gleichmäßiger und gleichförmiger Austritt des der hohlen Rakel zugeführten Schlickers aus der schlitzförmigen Austrittsöffnung der Hohlrakel das Streichen einer Schicht definierter Dicke ermöglicht.

Gemäß einer weiteren Ausführungsform wird ein Verfahren zum Herstellen bzw. Erzeugen eines Formkörpers bzw. eines Grünkörpers vorgeschlagen, wobei der Feststoffanteil der Suspension ausgewählt ist unter einem Polymer, einem Metall, einem keramischen Material oder aus einer Mischung die zumindest eine Polymer, ein Metall oder ein keramisches Material enthält. Vorteile dieser Ausführungsform bestehen in der Möglichkeit, die Eigenschaften des Grünkörpers und dementsprechend auch die Eigenschaften eines gesinterten Bauteils einstellen und variieren zu können, insbesondere in Hinsicht auf dessen elektrische Leitfähigkeit und/oder Dielektrizitätskonstante.

Gemäß einer weiteren Ausführungsform wird ein Verfahren zum Erzeugen eines Formkörpers bzw. eines Grünkörpers vorgeschlagen, wobei die Maße der Schicht den Maßangaben einer Schicht eines schichtweise aufgebauten Modells entsprechen. Daraus ergibt sich der Vorteil, dass Schichten definierter Dicke generiert werden und somit die direkte Übertragung der Schichtinformation aus dem zum Aufbau verwendeten virtuellen Modell, welches mit gleichmäßigen Schichtdicken arbeitet, in den Aufbauprozess des Grünkörpers bzw. eines gesinterten keramischen Bauteils möglich ist. Die direkte Übertragbarkeit Modell - Prototyp vereinfacht die Herstellung des Prototyps und erleichtert die Optimierung der Prozessparameter.

Gemäß einer weiteren Ausführungsform wird ein Verfahren zur Erzeugung eines Formkörpers bzw. eines Grünkörpers vorgeschlagen, wobei das Modell ein CAD-Modell oder ein CAD/CAM - Modell ist.

Gemäß weiteren beispielhaften Ausführungsformen wird ein Rapid Prototyping Verfahren vorgeschlagen, umfassend: - Erzeugen eines Grünkörpers nach einem der vorausgehenden Ausführungsbeispiele und - Sintern des Grünkörpers. Dieses Verfahren ermöglicht vorteilhafterweise die Herstellung eines Keramikartikels mit einer Dichte, die bei der konventionellen Herstellung einer Keramik aus dem Grünkörper üblicherweise nicht erreichbar ist. Beispielsweise kann der Binder eine anorganische Komponente darstellen oder der Binder kann eine organische Komponente umfassen, die beim Sintern zu einer anorganischen Komponente pyrolysiert wird und dadurch der gesinterten Keramik eine höhere Dichte und Festigkeit verleiht.

Ein mittels Schlickerdeposition schichtweise aufgebauter Formkörper bzw. Grünkörper besitzt typischerweise eine Dichte höher 60% der theoretischen Dichte der verwendeten Keramik oder Keramikmischung. Im Falle von Aluminiumoxid (Al₂O₃) mit einer theoretischen Dichte von 3,94 g·cm⁻³ bedeutet dies, dass mittels Schlickerdeposition schichtweise aufgebaute Al₂O₃-Grünkörper eine Dichte größer als 2,36 g·cm⁻³ besitzen.

Die vorstehend beschriebenen Ausführungsformen können beliebig miteinander kombiniert werden.

Ein wesentlicher erfinderischer Schritt liegt in der Herstellung keramischer, aber auch metallischer und/oder polymerer Grünschichten durch eine Kombination eines Laserverfahrens, das vergleichbar zum lokalen Lasersintern ist, wobei jedoch die Pulverpartikel nicht gesintert, sondern verfestigt werden, indem beispielsweise ein laseraushärtbarer Binder verwendet wird, der entweder bereits in der verwendeten Suspension, beispielsweise einem keramischen Schlicker, enthalten ist, oder der in eine zumindest teilweise getrocknete Schicht, beispielsweise in eine getrocknete Keramikschicht, eindringt oder diese Schicht durchdringt.

Gemäß typischer Ausführungsformen wird zunächst ein keramischer Schlicker mittels einer geeigneten Fördereinrichtung aus einem Speichergefäß durch einen hohlen Rakel bei einer Spaltweite von beispielsweise 500 µm gepresst.

Die hohle Rakel besteht aus einem geschlossenem Volumen, das zwei Öffnungen besitzt: einen Schlauchanschluss für die Schlickerzuführung und einer schlitzförmigen Austrittsöffnung für den Schlickeraustritt. Das Volumen ist derart gestaltet, dass es einen gleichmäßigen und gleichförmigen Austritt des durch den Schlauchanschluss zugeführten Schlicker aus der schlitzförmigen Austrittsöffnung ermöglicht. Die schlitzförmige Austrittsöffnung erstreckt sich wesentlich über die Breite der Rakel. Der aus dem Schlitz austretende Schlicker wird mittels der Rakel zu einer Schicht definierter Dicke gestrichen.

Gemäß bevorzugten Ausführungsformen des vorgeschlagenen Verfahrens weist die so erhaltene Schicht definierter Dicke eine konstante Dicke auf. Ein wesentliches Merkmal einer so erhaltenen Schicht definierter Dicke besteht darin, dass die jeweils aufgebrachte Schicht eine über ihre gesamte Ausdehnung konstante Höhe aufweist und sich somit insbesondere durch eine ebene, bzw. durch eine nicht gewellte und damit planare Oberfläche auszeichnet. Jede mit der Hohlrakel gemäß des vorgeschlagenen Verfahrens erhaltene Schicht ist somit dadurch gekennzeichnet, dass sie vorteilhafterweise eine ebene, nicht gewellte Oberfläche aufweist.

Damit besteht der letztlich erhaltene Formkörper durchgängig aus in sich planaren Schichten und ist frei von Wellungen, da Schlicker stets auf eine planare Oberfläche aufgetragen wird. Das bietet besondere Vorteile für ein gleichmäßiges Trocknen und die damit erreichbare gleichmäßige Haftung nachfolgend übereinander angeordneter Schichten.

Ein beispielhaftes Ausführungsbeispiel der Rakel besteht aus zwei in definiertem Abstand zueinander parallel angeordneten rechteckigen Platten. An drei Seiten sind die rechteckigen Platten gegeneinander abgedichtet, so dass ein an einer Seite offener Hohlraum entsteht. Die offene Seite bzw. die einseitige Öffnung der Hohlrakel dient als schlitzförmige Austrittsöffnung für den Schlicker, wobei der Schlicker über einen Schlauchanschluss an einer der Platten zugeführt werden kann.

Dabei kann der Schlauchanschluss beispielsweise so ausgeführt sein, dass eine der Platten eine zum offenen Hohlraum gerichtete durchgehende Öffnung hat, die auf der Außenseite der Platte in eine Schlauch-Olive oder einen andersartigen Anschluß für einen den Schlicker zuführenden Schlauch übergeht.

Ein Manipulator bewegt die Rakel mit der Austrittsöffnung zur Platte gerichtet im vertikalen Abstand, beispielsweise im Abstand von 1-300 µm zu einer beheizten keramischen Platte über diese Platte, wodurch der Schlicker in einer dünnen Schicht aufgetragen wird. Die Platte hat anfänglich eine Oberflächentemperatur von weniger als 100 °C, um ein Aufkochen des Wasseranteils aus dem Schlicker während des Auftragens der ersten Schichten zu verhindern. Mit steigender Schichtanzahl kann die Temperatur deutlich gesteigert werden, da die bereits aufgebrachten Lagen sehr saugfähig sind und die Feuchtigkeit der neuen Schicht innerhalb von Sekundenbruchteilen aufnehmen. Die jeweils neu aufgetragene Schicht wird dadurch stabilisiert und die Feuchtigkeit wird innerhalb von weniger als 30 Sekunden verdampft.

Neben der Trocknung über die beheizte Platte von unten kann noch zusätzlich eine Strahlungsheizung in Kombination mit einem Lüfter eingesetzt werden. Eine zusätzliche Trocknung von oben ist nötig, weil der entstandene Scherben isolierend wirkt und damit die Temperatur der obersten Schichten bei steigender Dicke des Schichtaufbaus zu niedrig für eine ausreichend schnelle Trocknung werden kann. Die Dichte der mit diesem Verfahren herstellbaren Grünschichten beträgt ca. 65% und ist damit zur Dichte konventionell hergestellter Grünkörper vergleichbar. Dabei wird unter der Dichte des Grünkörpers der Quotient aus der Masse des Grünkörpers und seinem Volumen, das an Hand von den äußeren Konturen des Grünkörpers berechnet wird, verstanden.

Ähnlich dazu, kann ebenso ein aus Grünschichten bestehender Formkörper hergestellt werden, indem eine dem keramischen Schlicker ähnliche Dispersion bzw. Suspension von Polymerpartikeln und/oder Metallpartikeln zum Schichtaufbau verwendet wird. Die zur Trocknung einer Polymerpartikel aufweisenden Schicht eingesetzten Temperaturen (Heizplatte, Lüfter) werden dabei den jeweiligen Glasübergangstemperaturen des betreffenden Polymers angepasst.

Im Unterschied zum bekannten LSD Verfahren wird nachfolgend mittels einer Sprühtechnologie ein Binder auf die erhaltene Grünschicht aufgespritzt. Der Binder benetzt die keramischen Partikel und dringt in die Grünschicht ein oder durchdringt die Grünschicht. Diese Durchdringung der Schicht ist notwendig, um alle Partikel im Schichtquerschnitt zu verbinden und die obere Schicht an tiefer liegende Schichten lokal zu binden. Die Menge des aufgespritzten Binders ist so bemessen, dass der Binder bis zu einer gewünschten Tiefe in den aus Grünschichten aufgebauten Körper eindringen kann. Die jeweils gewählte Eindringtiefe des Binders richtet sich nach der Schichtdicke einer einzelnen aufgetragenen Schicht und dem gewünschten Durchdringungsgrad des Binders in tiefer liegende Schichten.

Ebenso kann der Binder durch Tauchen der getrockneten Schicht in den flüssigen Binder, eine den Binder in gelöster Form enthaltende Flüssigkeit oder durch Tauchen in eine Suspension des Binders zum Eindringen in die getrocknete Schicht gebracht werden.

Alternativ kann der Binder auch bereits in der zur Generierung der Schicht verwendeten Partikel-Suspension enthalten sein, jedoch deutlich in einer Konzentration, die unterhalb der typischerweise für die Stereolithografie verwendeten, also unterhalb von 10 % liegt.

Der Binder hat die Eigenschaft, dass er nach dem Aufspritzen thermisch oder photonisch ausgehärtet und/oder thermisch oder photonisch vernetzt werden kann und somit beispielsweise mittels Laserstrahlung lokal begrenzt thermisch ausgehärtet bzw. vernetzt oder ausgehärtet und vernetzt werden kann. Dabei werden die Pulverpartikel des zum Schichtaufbau eingesetzten Materials volumetrisch vom aushärtenden/vernetzenden Binder verklebt.

Ohne den Schritt der thermisch oder photonisch initiierten Aushärtung/Vernetzung hat der Binder keine oder nur eine sehr geringe, für den Prozess unbedeutende Bindewirkung für die Pulverpartikel. Mit seiner thermisch oder photonisch initiierten Aushärtung/Vernetzung sorgt der Binder für eine dauerhafte Verklebung der Pulverpartikel der Suspension.

Nach Abschluss des thermischen oder photonischen Aushärtens bzw. Vernetzens mittels Laserstrahlung wird eine neue Schicht einer Dicke von 1-500 µm, bevorzugt von 5 µm bis 300 µm, insbesondere von 25 µm bis 150 µm aufgebracht und getrocknet, danach wird erneut Binder aufgetragen und ausgehärtet/vernetzt. Sukzessive wird derart ein Bauteil Schicht für Schicht aufgebaut. Nach Abschluss der Aufbauphase wird der nun aus einer Vielzahl von Schichten bestehende Grünkörper in ein Wasserbad oder in ein anderes Medium gelegt, das den Teil des Grünkörpers auflöst und/oder auswäscht, der nicht vom Binder ausgehärtet/vernetzt ist. Die binderfreien Bereiche des Grünkörpers lösen sich vollständig auf und der Grünkörper gibt das Bauteil frei.

Das so generierte Bauteil entspricht in seinen Eigenschaften einem konventionellen Grünkörper, dessen Porenvolumen teilweise mit einem Binder aufgefüllt ist. Bei Verwendung eines organischen Binders wird der Binder beim Sintern des Körpers leicht ausgetrieben. Im Falle eines anorganischen Binders, z.B. bei einem SiO₂-Sol basierten System, kann die Dichte des erhaltenen Grünkörpers sogar noch höher liegen, als bei einem konventionell hergestellten keramischen, polymeren bzw. metallischen Grünkörper.

Weiterhin können erstmals für einen generativen Herstellungsprozess wie für das Rapid Prototyping keramische/metallische/polymere Grünkörper generiert werden, die eine Dichte aufweisen, die vergleichbar oder sogar höher als jene konventionell hergestellter Grünkörper ist, ohne dass dabei eine Druckertechnologie, vergleichbar dem 3D Drucken, eingesetzt werden muss.

Grünkörper, deren Eigenschaften von jenen eines konventionell hergestellten Grünkörpers abweichen, erlauben in der Regel nur mit großem technologischem Aufwand oder gar nicht, keramische Bauteile herzustellen, deren Eigenschaften mit einem konventionell hergestellten keramischen Bauteil vergleichbar sind. Als Beispiel sei ein keramischer Grünkörper genannt, der mittels Stereolithographie hergestellt wird. Dieser Grünkörper ist mit bis zu 60 Volumen-% Organik besser als Keramikgefülltes Polymer zu beschreiben. Die Organik muss in aufwendigen Entbinderungsprozessen ausgetrieben werden, bevor der eigentliche Sintervorgang beginnen kann. Je nach Bauteilgeometrie kann das Entbindern zu Defekten im Grünkörper führen, die durch anschließendes Sintern im Allgemeinen nicht beseitigt werden können.

Das 3D Drucken führt wegen der geringen Schüttdichte der keramischen Pulver zu Grünkörpern geringer Dichte. Mittels Sintern lassen sich aus diesen Grünkörpern in der Regel keine dichten Keramiken generieren. Herumfliegende Pulverpartikel der losen Pulverschicht verunreinigen beim 3D Drucken immer wieder den Druckkopf und verkleben die Druckdüsen. Bei der Verwendung feinster keramischer Pulver, die z.B. zur Steigerung der Sinteraktivität oder zur Ausbildung eines besonders feinkristallinen Gefüges des keramischen Bauteils eingesetzt werden, verstärken sich diese negativen Effekte in aller Regel noch.

Im LSD Verfahren der DE 101 28 664 werden mittels schichtweiser Schlickerabscheidung Grünschichten mit einer Dichte generiert, die der eines konventionellen Grünkörpers vergleichbar ist. Jedoch führt das Lasersintern zu stark anisotropen Eigenschaften des erhaltenen Prototyps und unter Umständen durch eine lokal stark überhöhte Temperatur zu Nebeneffekten wie Blasenbildung, der unerwünschten Bildung glasiger oder keramischer Phasen, etc. Das LSD Verfahren liefert somit keine Bauteile, die mit konventionell hergestellten Grünkörpern oder einer dicht gesinterten Keramik vergleichbar sind.

Nur das in US 6,596,224 B1 beschriebene Verfahren eignet sich zur Generierung von Grünkörpern mit Eigenschaften, die vergleichbar zu jenen eines konventionell hergestellten Grünkörpers sind. Jedoch hat dieses Verfahren den Nachteil, dass keine Schichten definierter Dicke generiert werden und somit die direkte Übertragung der Schichtinformation aus dem zum Aufbau notwendigen virtuellen Modell, welches mit gleichmäßigen Schichtdicken arbeitet, in den Aufbauprozess problematisch ist. Weiter werden zum Aufbringen des benötigten Binders Druckerköpfe eingesetzt, wobei es derzeit keine Druckkopfentwicklung speziell für additive Fertigungsverfahren gibt und verfügbare Druckerköpfe eine kontinuierliche Verwendung in Rapid-Prototyping Verfahren auf Grund von häufig verklebten und verstopften Druckdüsen verhindern.

Die Dichte der mit dem vorgeschlagenen Rapid Prototyping Verfahren erhältlichen Grünkörper ähnelt der von konventionell hergestellten Grünkörpern, gleicht jener sogar oder übertrifft diese im Falle der Verwendung anorganischer Bindemittel. Da der für die Fertigung des Prototypen verwendete Schlicker bzw. das verwendete disperse System die gleiche Zusammensetzung aufweisen kann wie jener für das vom Prototypen modellierte Endprodukt, gestattet es das vorgeschlagene Verfahren beispielsweise, ohne großen technologischen Aufwand keramische Bauteilen herzustellen, die in ihren wesentlichen Eigenschaften jenen konventionell hergestellter keramischer Bauteile entsprechen.

Im Unterschied zu dem in US 6,596,224 beschriebenen Verfahren, dass es nicht erlaubt, Schichten definierter Dicke zu generieren, können mit dem vorgeschlagenen Rapid Prototyping Verfahren identische Dicken für alle Schichten erzielt werden. Aus diesem Grund sind die Schichtinformation aus dem virtuellen Modell, das üblicherweise mit gleichmäßigen Schichtdicken arbeitet, anders als bei bisher bekannten Verfahren, direkt in den Aufbauprozess übertragbar.

Weiterhin werden zum Aufbringen des benötigten Binders im Unterschied zu bekannten Verfahren keine Druckerköpfe, sondern eine Sprühtechnologie eingesetzt. Da es derzeit keine Druckkopfentwicklung speziell für additive Fertigungsverfahren gibt, die zur Verfügung stehenden Druckköpfe also zahlreiche Nachteile aufweisen, die einen kontinuierlichen Prozessablauf verhindern, verzichtet das beschriebene Verfahren auf die Verwendung von Druckkopftechnologien vollständig. Die eingesetzte Sprühtechnologie ist wenig störanfällig und gestattet die kontinuierliche Durchführung des Rapid-Prototyping Verfahrens.

Das beschriebene Verfahren erlaubt die Generierung von Grünkörpern mit nur geringen Anteilen an Bindern und ist in dieser Hinsicht mit dem 3D Drucken vergleichbar.

Bezogen auf die hohe Dichte der erhältlichen Grünkörper ist das vorgeschlagene den in DE 101 28 664 und US 6,596,224 B1 beschriebenen Verfahren vergleichbar, kommt jedoch ohne die Verwendung von Druckköpfen zum Aufbringen des Binders und ohne die lokale Erhitzung des Pulvers auf Sintertemperatur aus. Damit gestattet es das vorgeschlagene Verfahren, die bei der Kombination von Drucktechnologie und Sintern unweigerlich resultierenden anisotropen Eigenschaften des Grünkörpers zu vermeiden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

## Patentansprüche

1. Verfahren zum Herstellen eines Formkörpers umfassend:
- Auftragen einer Partikelschicht und Aufbringen eines Bindemittels;
- Aushärten des Formkörpers,
wobei das Verfahren die folgenden Schritte aufweist:
- Ausbilden eines Formkörpers aus einem metallischen oder keramischen Material, indem wiederholt die folgenden Schritte ausgeführt werden:
- Auftragen einer Schicht einer Suspension aus metallischen oder keramischen Partikeln, die in einer Suspensionsflüssigkeit dispergiert sind, in einem Arbeitsvolumen,
- Entfeuchten der aufgetragenen Schicht im Arbeitsvolumen und lokales Aufbringen auf die getrocknete Schicht und Aushärten eines Bindemittels einem Schichtmodell des herzustellenden Formkörpers entsprechend, derart, dass Partikel in der getrockneten Schicht untereinander und wahlweise zusätzlich mit Partikeln mindestens einer unter der getrockneten Schicht liegenden Schicht lokal haftend verbunden werden, und
- Entformen des Formkörpers, indem bindemittelfreies Restmaterial von den mit Hilfe des Bindemittels untereinander verbundenen Partikeln gelöst wird, **gekennzeichnet durch** den folgenden Schritt:
- wobei das Erzeugen der Schicht unter Verwendung einer hohlen Rakel erfolgt, wobei die Suspension durch den hohlen Rakel gefördert wird und die schlitzförmige Austrittsöffnung der Hohlrakel das Streichen einer Schicht definierter Dicke ermöglicht.

2. Verfahren nach Anspruch 1, **dadurch gekennzeichnet, dass** das Bindemittel mit Hilfe einer Druckvorrichtung lokal aufgebracht wird oder/und **dadurch gekennzeichnet, dass** die aufgetragene Schicht beim Entfeuchten erhitzt wird, oder/und **dadurch gekennzeichnet, dass** der Formkörper als ein poröser Formkörper hergestellt wird, oder/und **dadurch gekennzeichnet, dass** beim Aushärten des Bindemittels ein oder mehrere Schritte aus der folgenden Gruppe von Schritten ausgeführt werden: Lufttrocknen, Wärmezuführen und UV-Lichtbestrahlen, oder/und **dadurch gekennzeichnet, dass** das Entformen zumindest teilweise in einem Flüssigkeitsbad ausgeführt wird, oder/und **dadurch gekennzeichnet, dass** der Formkörper mit einer Dichte von wenigstens 60 Vol.-%, bevorzugt von wenigstens 65 Vol.-% und weiter bevorzugt von wenigstens 70 Vol.-% hergestellt wird, oder/und **dadurch gekennzeichnet, dass** beim Auftragen der Schicht eine Grünschicht gebildet wird, indem eine Suspension aus keramischen Partikeln aufgetragen wird, oder/und **dadurch gekennzeichnet, dass** ein organisches Bindemittel verwendet wird, welches nach dem Aushärten nicht wasserlöslich und / oder nicht löslich in organischen Lösungsmitteln ist, oder **dadurch gekennzeichnet, dass** ein anorganisches Bindemittel verwendet wird, oder/und **dadurch gekennzeichnet, dass** der entformte Formkörper gesintert wird.

3. Verfahren nach Anspruch 1, weiterhin aufweisend den Schritt:
- lokales Aufbringen eines die Löslichkeit des Grünkörpers ändernden flüssigen Bindemittels gemäß dem Schichtmodell des herzustellenden Formkörpers entsprechend, derart, dass die Löslichkeit des Formkörpers homogen und unterschiedlich zu der des umgebenden Partikelmaterials ist.

4. Verfahren zum Herstellen eines Formkörpers, wobei der Formkörper ein Grünkörper ist, und das Verfahren umfasst:
(a) Erzeugen einer Schicht einer einen laseraushärtbaren und/oder laservernetzbaren Binder enthaltenden Suspension;
(b) Aushärten und/oder Vernetzen des Binders durch lokale Laserexposition; optionales Wiederholen der Schritte (a) und (b), wobei eine zusätzliche Schicht auf einer ausgehärteten und/oder vernetzten Schicht aufgetragen wird;
(c) Auswaschen und/oder Lösen nicht ausgehärteter und/oder nicht vernetzter Anteile in einem flüssigen Medium, um den Grünkörper zu erhalten **gekennzeichnet dadurch, dass**
(d) wobei das Erzeugen der Schicht unter Verwendung einer hohlen Rakel erfolgt, wobei die Suspension durch den hohlen Rakel gefördert wird und die schlitzförmige Austrittsöffnung der Hohlrakel das Streichen einer Schicht definierter Dicke ermöglicht.

5. Verfahren nach Anspruch einem der Ansprüche 1 bis 3, wobei das Erzeugen der Schicht mit einer Suspension erfolgt, in der der Binder enthalten ist.

6. Verfahren nach einem der Ansprüche 1 bis 3, wobei das Erzeugen der Schicht ein zumindest teilweises Eindringen eines Binders in eine getrocknete Schicht einer Suspension umfasst, die keinen Binder enthält.

7. Verfahren nach einem der Ansprüche 1 bis 3, wobei das Eindringen des Binders durch Besprühen der getrockneten Schicht mit dem Binder und/oder durch Tauchen der getrockneten Schicht in den Binder oder in eine den Binder enthaltende Flüssigkeit bewirkt wird.

8. Verfahren nach einem der Ansprüche 1 bis 3, wobei der ausgehärtete und/oder vernetzte Binder im flüssigen Medium nicht löslich ist.

9. Verfahren nach einem der Ansprüche 1 bis 3, wobei das Medium Wasser und/oder ein organisches Lösungsmittel umfasst, und wobei das organische Lösungsmittel ausgewählt ist unter: Aceton, Cyclohexan, Dioxan, n-Hexan, n-Oktan, Toluol, Trichlorethanol, Dimethylethylketon, iso-Propanol, Ethylalkohol, Methyl-ethyl-keton, oder daraus erhältlichen Mischungen.

10. Verfahren nach einem der vorstehenden Ansprüche,
wobei eine Dichte des Grünkörpers mindestens 60% der mittleren Materialdichte eines Feststoffanteils der Suspension beträgt, wenn die Dichte des Grünkörpers als Quotient aus einer Masse des Grünkörpers und einem Volumen, das an Hand von äußeren Konturen des Grünkörpers berechnet wird, definiert ist.

11. Verfahren nach einem der vorstehenden Ansprüche, wobei der Feststoffanteil der Suspension ausgewählt ist unter einem Polymer, einem Metall, einem keramischen Material oder aus einer Mischung die zumindest eine Polymer, ein Metall oder ein keramisches Material enthält.

12. Verfahren nach einem der vorstehenden Ansprüche, wobei die Maße der Schicht den Maßangaben einer Schicht eines schichtweise aufgebauten Modells entsprechen.

13. Verfahren nach einem der vorstehenden Ansprüche, wobei das Modell ein CAD/CAM-Modell ist.

14. Rapid Prototyping Verfahren, umfassend:
- Erzeugen eines Grünkörpers gemäß einem der vorstehenden Ansprüche;
- Sintern des Grünkörpers.

15. Vorrichtung zum Herstellen eines metallischen oder keramischen Formkörpers, mit:
- einem Vorratsvolumen, welches konfiguriert ist, eine Suspension aus metallischen oder keramischen Partikeln aufzunehmen, die in einer Suspensionsflüssigkeit dispergiert sind,
- eine Schicht bildende Auftragseinrichtung, welche konfiguriert ist, wiederholt eine Suspensionsmenge aus dem Vorratsvolumen zu entnehmen und in ein Arbeitsvolumen zu übertragen und dort als Schicht aufzutragen,
- eine Entfeuchtungseinrichtung, welche konfiguriert ist, die aufgetragene Schicht im Arbeitsvolumen zu entfeuchten,
- eine Bindemittel-Auftrageinrichtung, welche konfiguriert ist, ein Bindemittel einem Schichtmodell des herzustellenden Formkörpers entsprechend auf die entfeuchtete Schicht lokal aufzutragen, derart, dass Partikel in der entfeuchteten Schicht untereinander und wahlweise zusätzlich mit Partikeln mindestens einer unter der entfeuchteten Schicht liegenden Schicht lokal haftend verbunden werden, und
- eine Entformungseinrichtung, welche konfiguriert ist, den Formkörper zu entformen, indem bindemittelfreies Restmaterial von den mit Hilfe des Bindemittels untereinander verbundenen Partikeln gelöst wird, **gekennzeichnet durch**,
- einen hohlen Rakel zum Erzeugen einer gleichmäßigen Schicht, wobei die Suspension durch den hohlen Rakel gefördert wird und die schlitzförmige Austrittsöffnung der Hohlrakel das Streichen einer Schicht definierter Dicke ermöglicht.

## Claims

1. A method for producing a molded body, comprising:
- applying a particle layer and a binder;
- curing the molded body,
said method including the following steps:
- forming a molded body from a metallic or ceramic material by repeatedly performing the following steps:
- applying a layer of a suspension of metallic or ceramic particles, which are dispersed in a suspension fluid, in a working volume,
- dehumidifying the applied layer in the working volume and locally applying onto the dried layer and curing a binder in a manner corresponding to a layer model of the molded body to be produced such that particles in the dried layer are bonded to each other and optionally also to particles of at least one layer located below the dried layer in a locally adhering manner, and
- demolding the molded body by removing binder-free residual material from the particles bonded to each other by means of the binder, **characterized by** the following step:
- producing the layer using a hollow coating knife, wherein the suspension is conveyed through the hollow coating knife and the slot-shaped outlet opening of the hollow coating knife allows the spreading of a layer having a defined thickness.

2. The method according to claim 1, **characterized in that** the binder is applied locally by means of a printing device or/and **characterized in that** the applied layer is heated during dehumidification, or/and **characterized in that** the molded body is produced as a porous molded body, or/and **characterized in that** one or more steps selected from the following group of steps are carried out during the curing of the binder:
air drying, supplying heat and irradiation with UV light, or/and **characterized in that** demolding is performed at least partly in a liquid bath, or/and **characterized in that** the molded body is produced with a density of at least 60% by volume, preferably at least 65% by volume and further preferably at least 70% by volume, or/and **characterized in that** a green layer is formed during application of the layer, by applying a suspension of ceramic particles, or/and **characterized in that** an organic binder is used which is not water soluble and/or not soluble in organic solvents after curing, or **characterized in that** an inorganic binder is used, or/and **characterized in that** the molded body removed from the mold is sintered.

3. The method according to claim 1, further comprising the step of:
- locally applying a liquid binder, which modifies the solubility of the green body, in a manner corresponding to the layer model of the molded body to be produced, such that the solubility of the molded body is homogeneous and differs from that of the surrounding particulate material.

4. A method for producing a molded body, wherein the molded body is a green body ist, and said method comprises the steps of:
(a) producing a layer of a suspension containing a laser-curable and/or laser-crosslinkable binder;
(b) curing and/or cross-linking the binder by local laser exposure; optionally repeating steps (a) and (b), wherein an additional layer is applied onto a cured and/or crosslinked layer;
- (c) washing out and/or dissolving in a liquid medium any parts not cured and/or not crosslinked so as to obtain the green body, **characterized in that**
- (d) producing the layer is effected using a hollow coating knife, wherein the suspension is conveyed through the hollow coating knife and the slot-shaped outlet opening of the hollow coating knife allows the spreading of a layer having a defined thickness.

5. The method according to any one of claims 1 to 3, wherein producing the layer is effected using a suspension containing the binder.

6. The method according to any one of claims 1 to 3, wherein producing the layer comprises at least partial penetration of a binder into a dried layer of a suspension containing no binder.

7. The method according to any one of claims 1 to 3, wherein the penetration of the binder is effected by spraying the dried layer with the binder and/or by immersing the dried layer in the binder or in a liquid containing the binder.

8. The method according to any one of claims 1 to 3, wherein the cured and/or crosslinked binder is not soluble in the liquid medium.

9. The method according to any one of claims 1 to 3, wherein the medium comprises water and/or an organic solvent, and wherein the organic solvent is selected from: acetone, cyclohexane, dioxane, n-hexane, n-octane, toluene, trichloroethanol, dimethyl ethyl ketone, iso-propanol, ethyl alcohol, methyl ethyl ketone, or mixtures obtainable therefrom.

10. The method according to any one of the preceding claims, wherein a density of the green body is at least 60% of the average material density of a solid fraction of the suspension, if the density of the green body is defined as a quotient of a mass of the green body and a volume computed on the basis of external contours of the green body.

11. The method according to any one of the preceding claims, wherein the solid fraction of the suspension is selected from a polymer, a metal, a ceramic material or a mixture containing at least a polymer, a metal or a ceramic material.

12. The method according to any one of the preceding claims, wherein the measurements of the layer correspond to the dimensions of a layer of a model constructed layer by layer.

13. The method according to any one of the preceding claims, wherein the model is a CAD/CAM model.

14. A rapid prototyping method comprising the steps of:
- producing a green body according to any one of the preceding claims;
- sintering of the green body.

15. A device for producing a metallic or ceramic molded body, comprising:
- a storage volume configured to receive a suspension of metallic or ceramic particles dispersed in a suspension fluid,
- a layer-forming application device configured to repeatedly take a suspension quantity from the storage volume and transfer it to a working volume in order to apply it there as a layer,
- a dehumidifying device configured to dehumidify the applied layer in the working volume,
- a binder-applying device configured to apply a binder locally onto the dehumidified layer in a manner corresponding to a layer model of the molded body to be produced such that particles in the dehumidified layer are bonded to each other and optionally also to particles of at least one layer located below the dehumidified layer in a locally adhering manner, and
- a demolding device configured to demold the molded body by removing binder-free residual material from the particles bonded to each other by means of the binder, **characterized by**
- a hollow coating knife for producing a uniform layer, wherein the suspension is conveyed through the hollow coating knife and the slot-shaped outlet opening of the hollow coating knife allows the spreading of a layer having a defined thickness.

## Revendications

1. Procédé de fabrication d'un corps moulé, comportant les étapes suivantes:
- application d'une couche de particules et d'un liant;
- durcissement du corps moulé,
ledit procédé comportant les étapes suivantes:
- production d'un corps moulé à partir d'un matériau métallique ou céramique par exécution répétée des étapes suivantes:
- application d'une couche d'une suspension de particules métalliques ou céramiques, qui sont dispersées dans un liquide de suspension, dans un volume de travail,
- déshumidification de la couche appliquée dans le volume de travail et application locale d'un liant sur la couche séchée et durcissement du liant d'une manière correspondant à un modèle, produit couche par couche, du corps moulé à fabriquer de sorte que les particules dans la couche séchée soient liées, par adhésion locale, les unes aux autres et optionnellement aussi à des particules d'au moins une couche située au-dessous de la couche séchée, et
- démoulage du corps moulé par prélèvement du matériau résiduel sans liant des particules liées les unes aux autres au moyen du liant, **caractérisé par** l'étape suivante:
- production de ladite couche en utilisant une racle creuse, la suspension étant transportée à travers la racle creuse et l'ouverture de sortie en forme de fente de la racle creuse permettant d'étaler une couche présentant une épaisseur définie.

2. Procédé selon la revendication 1, **caractérisé en ce que** le liant est appliqué localement au moyen d'un dispositif d'impression ou/et **caractérisé en ce que** la couche appliquée est chauffée lors de la déshumidification, ou/et **caractérisé en ce que** le corps moulé est fabriqué sous forme d'un corps moulé poreux, ou/et **caractérisé en ce que** l'on exécute, lors du durcissement du liant, un ou plusieurs étapes choisies dans le groupe d'étapes suivant:
séchage à l'air, apport de chaleur et exposition aux rayons UV, ou/et **caractérisé en ce que** le démoulage est exécuté au moins partiellement dans un bain liquide, ou/et **caractérisé en ce que** le corps moulé est fabriqué de manière à avoir une densité d'au moins 60% en volume, de préférence d'au moins 65% en volume et plus préférablement d'au moins 70% en volume, ou/et **caractérisé en ce qu'**une couche crue est produite lors de l'application de ladite couche, par application d'une suspension de particules céramiques, ou/et **caractérisé en ce que** l'on utilise un liant organique qui, après son durcissement, n'est pas soluble dans l'eau et/ou n'est pas soluble dans des solvants organiques, ou **caractérisé en ce que** l'on utilise un liant non organique, ou/et **caractérisé en ce que** le corps moulé prélevé du moule est fritté.

3. Procédé selon la revendication 1, comportant en outre l'étape suivante:
- application locale d'un liant liquide, qui modifie la solubilité du corps en cru, d'une manière correspondant au modèle, produit couche par couche, du corps moulé à fabriquer, de sorte que la solubilité dudit corps moulé soit homogène et différente de celle du matériau particulaire entourant.

4. Procédé de fabrication d'un corps moulé, dans lequel le corps moulé est un corps en cru et ledit procédé comporte les étapes suivantes:
(a) production d'une couche d'une suspension contenant un liant durcissable par laser et/ou réticulable par laser;
(b) durcissement et/ou réticulation du liant par exposition locale à un laser; répétition optionelle des étapes (a) et (b), une couche additionnelle étant appliquée sur une couche durcie et/ou réticulée;
- (c) lavage et/ou dissolution dans un milieu liquide de toutes parties non durcies et/ou non réticulées de manière à obtenir le corps en cru, **caractérisé en ce que**
- (d) la production de ladite couche est effectuée en utilisant une racle creuse, la suspension étant transportée à travers la racle creuse et l'ouverture de sortie en forme de fente de la racle creuse permettant d'étaler une couche présentant une épaisseur définie.

5. Procédé selon l'une quelconque des revendications 1 à 3, dans lequel ladite couche est produite en utilisant une suspension contenant ledit liant.

6. Procédé selon l'une quelconque des revendications 1 à 3, dans lequel la production de ladite couche comporte une pénétration au moins partielle d'un liant dans une couche séchée d'une suspension ne contentant pas de liant.

7. Procédé selon l'une quelconque des revendications 1 à 3, dans lequel la pénétration dudit liant s'effectue par pulvérisation du liant sur ladite couche séchée et/ou par immersion de ladite couche séchée dans ledit liant ou dans un liquide contenant ledit liant.

8. Procédé selon l'une quelconque des revendications 1 à 3, dans lequel le liant durci et/ou réticulé n'est pas soluble dans le milieu liquide.

9. Procédé selon l'une quelconque des revendications 1 à 3, dans lequel ledit milieu comporte de l'eau et/ou un solvant organique, le solvant organique étant choisi dans le groupe constitué par: l'acétone, le cyclohexane, le dioxane, le n-hexane, le n-octane, le toluène, le trichloroéthanol, le diméthyléthylcétone, l'isopropanol, l'alcool éthylique, le méthyléthylcétone, ou leurs mélanges.

10. Procédé selon l'une quelconque des revendications précédentes, dans lequel une densité du corps en cru est au moins 60% de la densité de matière moyenne d'une fraction solide de ladite suspension, lorsque la densité du corps en cru est définie comme le quotient d'une masse du corps en cru et d'une volume calculée à partir de contours extérieurs du corps en cru.

11. Procédé selon l'une quelconque des revendications précédentes, dans lequel la fraction solide de ladite suspension est choisie dans le groupe constitué par un polymère, un métal, un matériau céramique ou un mélange contenant au moins un polymère, un métal ou un matériau céramique.

12. Procédé selon l'une quelconque des revendications précédentes, dans lequel les dimensions de ladite couche correspondent aux indications dimensionnelles d'une couche d'un modèle construit couche par couche.

13. Procédé selon l'une quelconque des revendications précédentes, dans lequel ledit modèle est un modèle CAD/CAM.

14. Procédé de prototypage rapide comportant les étapes suivantes:
- production d'un corps en cru selon l'une quelconque des revendications précédentes;
- frittage du corps en cru.

15. Dispositif de fabrication d'un corps moulé métallique ou céramique, ledit dispositif comportant:
- un réservoir configuré pour recevoir une suspension de particules métalliques ou céramiques, qui sont dispersées dans un liquide de suspension,
- un dispositif d'application produisant des couches et configuré pour prélever à plusieurs reprises une quantité de la suspension du réservoir et pour transférer cette quantité à une volume de travail afin de l'appliquer là sous forme d'une couche,
- un dispositif de déshumidification configuré pour déshumidifier la couche appliquée dans le volume de travail,
- un dispositif d'application de liant configuré pour l'application locale d'un liant sur la couche déshumidifiée d'une manière correspondant à un modèle, produit couche par couche, du corps moulé à fabriquer de sorte que des particules dans la couche déshumidifiée soient liées, par adhésion locale, les unes aux autres et optionnellement aussi à des particules d'au moins une couche située au-dessous de la couche déshumidifiée, et
- un dispositif de démoulage configuré pour démouler le corps moulé par prélèvement du matériau résiduel sans liant des particules liées les unes aux autres au moyen du liant, **caractérisé par**
- une racle creuse pour la production d'une couche uniforme, la suspension étant transportée à travers la racle creuse et l'ouverture de sortie en forme de fente de la racle creuse permettant d'étaler une couche présentant une épaisseur définie.
